# EUROPÄISCHE PATENTSCHRIFT

(11) **EP 4 484 252 B1**
(45) Veröffentlichungstag und Bekanntmachung des Hinweises auf die Patenterteilung: **14.01.2026**
(21) Anmeldenummer: 23182402.0
(22) Anmeldetag: 29.06.2023
(51) Int. Cl.: B62B 1/20, B66F 7/06, F16M 11/38

(54) **GESTELL FÜR EINE BEARBEITUNGSMASCHINE UND BEARBEITUNGSMASCHINE**
FRAME FOR A PROCESSING MACHINE AND PROCESSING MACHINE
BÂTI POUR UNE MACHINE D'USINAGE ET MACHINE D'USINAGE

(43) Veröffentlichungstag der Anmeldung: 01.01.2025
(73) Patentinhaber: Mafell AG, 78727 Oberndorf a.N. (DE)
(72) Erfinder: FALLER, Matthias, 78120 Furtwangen (DE); HÄHNLE, Oliver, 72461 Albstadt (DE); PFAU, Helmut, 72275 Alpirsbach (DE); GÜHRING, Samuel, 72280 Dornstetten (DE); LINK, Bernd, 72175 Dornhan (DE)
(74) Vertreter: Manitz Finsterwald Patent- und Rechtsanwaltspartnerschaft mbB

(56) Entgegenhaltungen:
- DE-A1- 102012 006 745
- US-A- 5 722 513

## Beschreibung

Die Erfindung betrifft ein Gestell für eine Bearbeitungsmaschine, insbesondere für eine Steinbearbeitungsmaschine wie etwa eine Steintrennmaschine, welches zwischen einer aufgestellten Arbeitsposition und einer zusammengeklappten Transportposition veränderlich ist. Außerdem betrifft die Erfindung eine solche Bearbeitungsmaschine.

Derartige Bearbeitungsmaschinen sind schwer und können einschließlich ihres Gestells etwa 100 kg wiegen. Das Gesamtgewicht kann zusätzlich ansteigen, wenn ein Staubbehälter vorhanden ist, der bei der Bearbeitung anfallenden Staub und Späne auffängt. Ein solche Staubbehälter kann im vollen Zustand etwa 20 kg wiegen.

Um die Bearbeitungsmaschine transportieren zu können, bietet es sich an, dass das Gestell in eine Transportposition überführt werden kann, in der das Gestell zusammengeklappt oder zusammengelegt ist. In dieser Transportposition wird der Transport des Gestells und der Bearbeitungsmaschine erheblich vereinfacht. Zugleich muss das Gestell in eine Arbeitsposition überführt werden können, in der die eigentliche Bearbeitung und Verwendung der Maschine erfolgen kann. Aufgrund des hohen Gewichts ist das Überführen von der Transportposition in die Arbeitsposition und umgekehrt allerdings sehr kraftaufwändig. Die US 5 722 513 A offenbart ein Gestell, wie es in Anspruch 1 definiert wird, allerdings offenbart das US-Dokument keine Federanordnung mit einer Zug- und Druckfeder.

Es ist daher eine Aufgabe der vorliegenden Erfindung, das Überführen des Gestells von der Transportposition in die Arbeitsposition und umgekehrt zu erleichtern.

Diese Aufgabe wird durch den Gegenstand des Anspruchs 1 gelöst. Vorteilhafte Weiterbildungen sind Gegenstand der abhängigen Ansprüche und ergeben sich aus der Beschreibung sowie den Zeichnungen.

Das erfindungsgemäße Gestell dient der Verwendung für eine Bearbeitungsmaschine, insbesondere für eine Steinbearbeitungsmaschine wie beispielsweise eine Steintrennmaschine oder Steinsäge. Das Gestell ist zwischen einer aufgestellten Arbeitsposition und einer zusammengeklappten Transportposition veränderlich und weist auf:
eine Gestellbasis, die eine Federanordnung mit einer Zugfeder und einer Druckfeder aufweist, und
ein Scherenhebelpaar, das einen ersten Scherenhebel und einen zweiten Scherenhebel aufweist, die drehgelenkig miteinander verbunden sind,
wobei ein Endabschnitt des ersten Scherenhebels drehgelenkig mit der Gestellbasis verbunden ist und ein Endabschnitt des zweiten Scherenhebels an der Gestellbasis entlang einer Verfahrrichtung linear verfahrbar angeordnet ist,
und wobei die Federanordnung an dem Endabschnitt des zweiten Scherenhebels angreift, um das Aufstellen des Gestells in die Arbeitsposition und/oder das Zusammenklappen des Gestells in die Transportposition durch ihre Federkraft zu unterstützen.

Die Gestellbasis kann insbesondere ein unteres Teil des Gestells sein, welches einen festen Stand des Gestells auf dem Boden ermöglicht. Beispielsweise kann die Gestellbasis eine rahmenförmige Grundform aufweisen, in welcher die Federanordnung aufgenommen sein kann. Neben der Gestellbasis und dem Scherenhebelpaar kann das Gestell außerdem ein weiteres Gestellteil, insbesondere ein oberes Gestellteil, aufweisen, an welches etwa eine Plattform für die Bearbeitungsmaschine und/oder einen Arbeitstisch angebunden werden kann. Zudem kann das Gestell ein oder mehrere weitere Scherenhebelpaare aufweisen, welche ebenfalls jeweils zwei drehgelenkig miteinander verbundene Scherenhebel aufweisen und in gleicher Weise wie das erste Scherenhebelpaar mittels einer entsprechenden Federanordnung an die Gestellbasis angebunden sind. Vorzugsweise weist das Gestell ein erstes und ein zweites Scherenhebelpaar auf, welche auf gegenüberliegenden Seiten der Gestellbasis angeordnet sind.

Aufgrund der Anordnung der Scherenhebel und deren Anbindung an die Gestellbasis sowie an die Federanordnung kann mittels der Federanordnung erreicht werden, dass diese eine Kraftunterstützung während des Aufstellens und des Zusammenklappens oder Zusammenlegens des Gestells bereitstellt. Dies erleichtert das Überführen des Gestells von der Transportposition in die Arbeitsposition und umgekehrt und ist ergonomisch sowie hinsichtlich des Arbeitskomforts vorteilhaft. Insbesondere sind die Kräfte der Federanordnung so austariert, dass während des Aufstellens und des Zusammenklappens oder Zusammenlegens des Gestells eine im Verhältnis zur benötigten Kraft ohne Federanordnung geringe und ungefähr konstante Kraft durch den Benutzer aufgebracht werden muss. Dadurch wird verhindert, dass das Gestell beim Lösen der Verriegelung von alleine absackt oder sich unkontrolliert aufstellt.

Vorzugsweise wirkt dabei die Zugfeder der Verfahrbewegung des Endabschnitts des zweiten Scherenhebels während des Zusammenklappens zur Transportposition entgegen und unterstützt die Verfahrbewegung des Endabschnitts des zweiten Scherenhebels während des Aufstellens zur Arbeitsposition.

Die Federachsen der Zugfeder und der Druckfeder können parallel zueinander ausgerichtet sind. Insbesondere können die Zugfeder und die Druckfeder koaxial zueinander angeordnet sind, das heißt dass die Zugfeder und die Druckfeder eine gemeinsame Federachse haben und entlang dieser Federachse hintereinander angeordnet sind.

Die Federachsen der Zugfeder und der Druckfeder können ferner parallel zu der Verfahrrichtung ausgerichtet sein. Insbesondere kann die Kraftwirklinie der Federkräfte der Verfahrrichtung entsprechen, um eine optimale Kraftwirkung zu erzielen. Vorzugsweise erstreckt sich die Verfahrrichtung entlang der Federachsen erstreckt.

Vorzugsweise weist die Gestellbasis eine Ausnehmung auf, entlang welcher sich die Verfahrrichtung erstreckt. Die Ausnehmung kann etwa als Langloch ausgebildet sein, an dem der Endabschnitt des zweiten Scherenhebels entlang der Verfahrrichtung verfahrbar angeordnet ist, beispielsweise mittels eines mit dem Endabschnitt verbundenen und in dem Langloch geführten Drehgelenks. Die Ausnehmung kann sich vorzugsweise etwa horizontal erstrecken, wobei vorzugsweise das Verstellen zwischen der Arbeitsposition und der Transportposition in einer zu der Erstreckungsrichtung des Langlochs orthogonal verlaufenden Richtung, insbesondere vertikal, erfolgt.

In vorteilhafter Ausgestaltung weist die Zugfeder ein erstes Federende und ein zweites Federende auf, wobei das erste Federende an dem Endabschnitt des zweiten Scherenhebels angreift und das zweite Federende ortsfest an der Gestellbasis festgelegt ist. Das erste Federende kann etwa über ein Drehgelenk und/oder eine Rolle mit dem Endabschnitt des zweiten Scherenhebels verbunden sein und so an diesem angreifen, wohingegen das zweite Federende, etwa durch Verschraubung, ortsfest an der Gestellbasis festgelegt ist. Somit wird die Zugfeder ausgelenkt, wenn der Endabschnitt des zweiten Scherenhebels von dem zweiten Federende wegbewegt wird, beispielsweise während des Zusammenklappens des Gestells zur Transportposition.

Das Gestell durchläuft vorzugsweise während des Veränderns seiner Position von der Arbeitsposition in die Transportposition und umgekehrt jeweils eine Übergangsposition, wobei die Druckfeder entkoppelt ist, wenn sich das Gestell in der Arbeitsposition befindet, wirksam ist, wenn sich das Gestell in der Transportposition befindet, und jeweils entkoppelt oder gekoppelt wird, wenn das Gestell die Übergangsposition durchläuft. Insbesondere kann der entkoppelte Zustand der Druckfeder ein Zustand sein, in dem zumindest ein Federende der Druckfeder keine Gegenkraft, beispielsweise durch Kontakt mit einer Anpressfläche, erfährt. In diesem Zustand ist die Feder entspannt in ihrem Gleichgewichtszustand. Die Druckfeder ist damit nur in der Transportposition und in deren Nähe wirksam, um das Zusammenklappen bzw. Aufstellen des Gestells in diesem Bereich zusätzlich zu erleichtern.

Vorteilhaft weist die Federanordnung Blockelemente auf, die jeweils eine Kontaktfläche für die Druckfeder aufweisen und relativ zueinander verfahrbar sind, um die Druckfeder zu komprimieren, wobei eines der Federenden der Druckfeder mit der Kontaktfläche eines Blockelements fest verbunden ist und das andere Federende der Druckfeder in Abhängigkeit von dem Abstand der Blockelemente die Kontaktfläche des anderen Blockelements kontaktiert. Der Kontakt zwischen dem anderen Federende und dem anderen Blockelement wird insbesondere an der Übergangsposition des Gestells hergestellt bzw. beendet. Das heißt, wenn die Druckfeder den Kontakt zu dem anderen Blockelement verliert, befindet sie sich in dem entkoppelten Zustand, und wenn die Druckfeder im Kontakt zu diesem Blockelement steht, ist sie wirksam.

Vorzugsweise ist eines der Blockelemente ortsfest an der Gestellbasis festgelegt, und das andere Blockelement wird bei einer Bewegung des Endabschnitts des zweiten Scherenhebels entlang der Verfahrrichtung mitbewegt, wodurch an der Übergangsposition der Kontakt der Druckfeder zu beiden Blockelementen hergestellt und die Druckfeder wirksam wird. Das mitbewegte Blockelement kann etwa über ein starres Verbindungselement, beispielsweise eine Platte oder ein Blech, mit dem Endabschnitt des zweiten Scherenhebels verbunden sein.

Vorzugsweise sind die Blockelemente jeweils mit von der Kontaktfläche hervorstehenden Vorsprüngen versehen, die in ein Inneres der Druckfeder eintauchen, etwa wenn die Druckfeder eine Schraubenfeder ist. Als das Innere der Druckfeder ist dabei der Raum bezeichnet, der von dem Material der Schraubenfeder eingeschlossen wird. Die Vorsprünge helfen, die Druckfeder präzise an den Kontaktflächen zu positionieren, sodass ein Verkanten oder Verrutschen vermieden wird.

Vorzugsweise ist entweder die Zugfeder eine Gaszugfeder und die Druckfeder vorzugsweise eine Schraubenfeder, oder die Druckfeder ist eine Gasdruckfeder und die Zugfeder vorzugsweise eine Schraubenfeder.

Um den Transport des Gestells zu vereinfachen, kann die Gestellbasis Räder aufweisen. Vorzugsweise kann die Gestellbasis zudem mit zumindest einem Handgriff auf einer gegenüberliegenden Seite der Gestellbasis zum Bewegen des Gestells versehen sein, sodass die Gestellbasis an dem Handgriff angehoben und dann mittels der Räder gerollt werden kann.

Bei der erfindungsgemäßen Bearbeitungsmaschine handelt es sich vorzugsweise um eine Steinbearbeitungsmaschine wie beispielsweise eine Steintrennmaschine oder eine Steinsäge. Die Bearbeitungsmaschine umfasst ein Werkzeug, insbesondere ein Sägeblatt, einen Elektromotor zum Antreiben des Werkzeugs und das erfindungsgemäße und zuvor beschriebene Gestell.

Nachfolgend wird die Erfindung schematisch und beispielhaft mit Bezug auf ein in den Zeichnungen gezeigtes Ausführungsbeispiel erläutert. Darin zeigt:
- Fig. 1: eine Bearbeitungsmaschine mit einem Gestell gemäß einem Ausführungsbeispiel, wobei sich das Gestell in der Arbeitsposition befindet,
- Fig. 2: die Bearbeitungsmaschine mit dem Gestell aus Fig. 1, wobei sich das Gestell in der Transportposition befindet,
- Fig. 3: eine Schnittansicht des Gestells in der Arbeitsposition gemäß Fig. 1,
- Fig. 4: eine Schnittansicht des Gestells in der Übergangsposition,
- Fig. 5: eine Schnittansicht des Gestells in der Transportposition gemäß Fig. 2 und
- Fig. 6: Kraftverlaufskurven, die den Kraftverlauf während des Aufstellens und Zusammenklappens des Gestells darstellen.

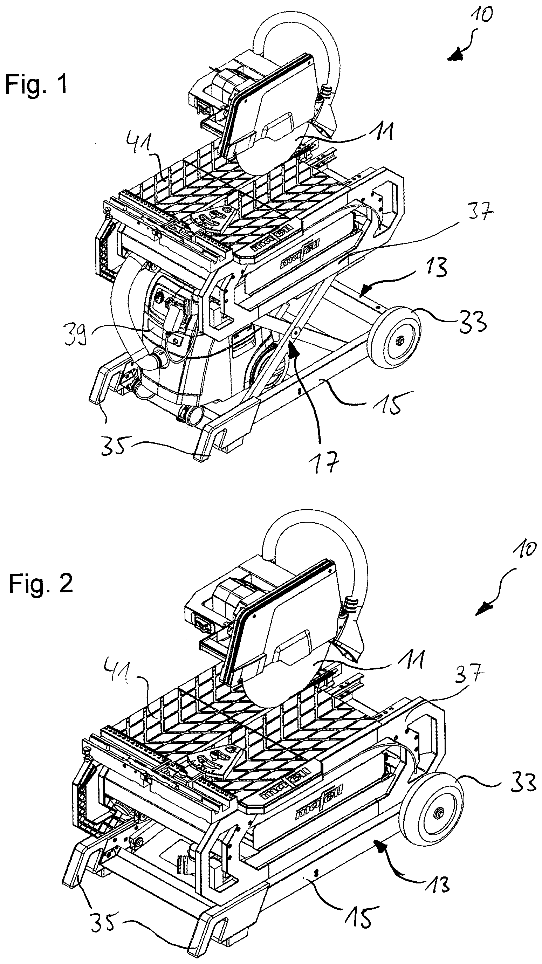

Fig. 1 und 2 zeigen eine Bearbeitungsmaschine 10, nämlich im vorliegenden Ausführungsbeispiel eine Steintrennmaschine, mit einem als Sägeblatt ausgebildeten Werkzeug 11, einem nicht dargestellten Elektromotor, der das Werkzeug 11 antreibt, und einem mittels Rädern 33 fahrbaren Gestell 13. Das Gestell 13 weist dazu auch Handgriffe 35 auf, die auf einer gegenüberliegenden Seite des Gestells 13 angeordnet sind, sodass das Gestell 13 mit den Handgriffen 35 angehoben und mittels den Rädern 33 bewegt werden kann. Auf dem Gestell 13 ist in der Arbeitsposition eine Saugvorrichtung 39 zum Absaugen von Staub, Spänen oder anderen Materialresten angeordnet. Diese ist üblicherweise an einen in Fig. 1 und 2 nicht sichtbaren Staubauffangbehälter angeschlossen, in welchem Staub und Späne gesammelt werden.

Das als Scherengestell ausgebildete Gestell 13 kann in eine in Fig. 1 gezeigte aufgestellte Arbeitsposition, welche der Position entspricht, in welcher die Bearbeitungsmaschine 10 bestimmungsgemäß verwendet wird, und in eine in Fig. 2 gezeigte zusammengeklappte Transportposition, welche der Position entspricht, in welcher die Bearbeitungsmaschine 10 leichter transportierbar ist, überführt werden. Zu diesem Zweck muss aus der Arbeitsposition (Fig. 2) der obere Teil des Gestells 13 mit der Bearbeitungsmaschine 10 vertikal mittels des Scherengestells 13 hochgefahren werden, bis das Gestell 13 die in Fig. 1 gezeigte Arbeitsposition erreicht. Umgekehrt muss aus der Arbeitsposition das Gestell 13 aufgrund der Schwerkraft und zusätzlicher Kraft der obere Teil des Gestells 13 mit der Bearbeitungsmaschine 10 vertikal mittels des Scherengestells 13 abgesenkt oder zusammengeklappt werden, bis das Gestell 13 die in Fig. 2 gezeigte Transportposition erreicht.

Dabei ist zu bedenken, dass das Gestell 13 mit der Bearbeitungsmaschine 10 ein Gewicht im Bereich von ungefähr 100 kg oder sogar mehr aufweisen kann. Das Gesamtgewicht kann zusätzlich um bis zu etwa 20 kg ansteigen, wenn der oben erwähnte Staubauffangbehälter voll ist. Somit ist das Bewegen des Gestells 13 von der Arbeitsposition in die Transportposition und umgekehrt nur schwer und mit großem Kraftaufwand zu bewältigen.

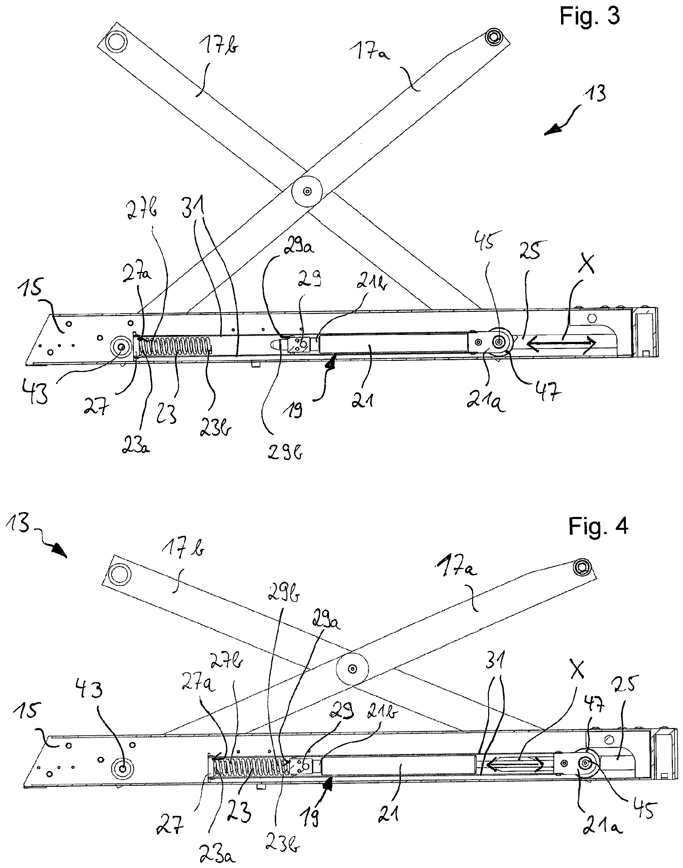

Um das Überführen des Gestells 13 von der Transportposition in die Arbeitsposition und umgekehrt zu erleichtern, weist das erfindungsgemäße Gestell 13 einen Mechanismus zum Bereitstellen einer Kraftunterstützung auf, welcher nachfolgend mit Bezug auf Fig. 3 bis 5 näher beschrieben wird.

Das Gestell 13 weist eine Gestellbasis 15, zwei Scherenhebelpaare 17 und ein oberes Gestellteil 37 auf, welches in Fig. 3 bis 5 ausgeblendet ist. Das obere Gestellteil 37 kann etwa eine Plattform für die Bearbeitungsmaschine 10 aufweisen. Zudem ist ein Arbeitstisch 41 an dem oberen Gestellteil 37 befestigt.

Die Gestellbasis 15 fungiert vorliegend als unteres Gestellteil, welches auf dem Boden aufliegt und an welchem die Räder 33 und die Handgriffe 35 angeordnet sind. Die Gestellbasis 15 ist als Rahmen ausgebildet.

Die beiden Scherenhebelpaare 17, von denen in den Figuren nur eines sichtbar ist, sind auf gegenüberliegenden Seiten des Gestells 13 angeordnet. Jedes Scherenhebelpaar 17 weist drehgelenkig miteinander verbundene Scherenhebel 17a, 17b auf. Ein unterer Endabschnitt des jeweiligen Scherenhebels 17a ist mittels eines Drehgelenks 43 drehgelenkig mit der Gestellbasis 15 verbunden, und ein oberer Endabschnitt des jeweiligen Scherenhebels 17a ist drehgelenkig und horizontal verfahrbar, beispielsweise mittels einer Rolle oder eines Gleitelements, an dem oberen Gestellteil 37 angeordnet (nicht gezeigt). Ein unterer Endabschnitt des jeweiligen Scherenhebels 17b ist mittels eines Drehgelenks 45 drehgelenkig mit einer Rolle 47 verbunden, die an der Gestellbasis 15 abrollt. Das Drehgelenk 45 ist dabei entlang einer als Langloch ausgebildeten Ausnehmung 25 der Gestellbasis 15 in einer horizontalen Verfahrrichtung X geführt, sodass der untere Endabschnitt des Scherenhebels 17b entlang der Verfahrrichtung X an der Gestellbasis 15 linear verfahrbar angeordnet ist. Der obere Endabschnitt des jeweiligen Scherenhebels 17b ist indes drehgelenkig an dem oberen Gestellteil 37 angeordnet (nicht gezeigt). Wenngleich in den Figuren nur eines der beiden Scherenhebelpaare 17 dargestellt ist, versteht sich, dass die Anbindung des zweiten Scherenhebelpaars auf der gegenüberliegenden Seite des Gestells 13 in gleicher Weise erfolgt.

Wie Fig. 3 bis 5 zeigen, weist das Gestell 13 zudem eine an der Gestellbasis 15 angeordnete Federanordnung 19 mit einer Zugfeder 21 und einer Druckfeder 23 auf. Die Zugfeder 21 weist gegenüberliegende Federenden 21a, 21b auf, und die Druckfeder 23 weist gegenüberliegende Federenden 23a, 23b auf. In dem vorliegenden Ausführungsbeispiel ist die Zugfeder 21 eine Gaszugfeder und die Druckfeder 23 eine Schraubenfeder. Allerdings sind auch andere Federkombinationen für die Federanordnung 19 denkbar, beispielsweise dass die Zugfeder 21 eine Schraubenfeder und die Druckfeder 23 eine Gasdruckfeder ist.

Die Zugfeder 21 und die Druckfeder 23 sind in einem Profilteil der Gestellbasis 15 angeordnet. Die Federn 21, 23 teilen sich eine gemeinsame Federachse und sind entlang der gemeinsamen Federachse hintereinander, also koaxial, angeordnet. Die gemeinsame Federachse und auch die Kraftwirkungslinie der Federkräfte erstrecken sich damit in Richtung des Langlochs 25 und der Verfahrrichtung X.

Das Federende 21a der Zugfeder 21 ist über das Drehgelenk 45 mit dem unteren Endabschnitt des zweiten Scherenhebels 17b verbunden. Das zweite Federende 21b ist über ein mit der Gestellbasis 15 verschraubtes Blockelement 29 ortsfest an der Gestellbasis 15 festgelegt. Beim Zusammenlegen des Gestells 13 von der Arbeitsposition in die Transportposition wird das Scherengestell 13 aufgrund des Eigengewichts der Bearbeitungsmaschine 10 und ggfs. zusätzlicher händischer Kraft vertikal nach unten bewegt, wobei die Zugfeder 21 gespannt und potentielle Energie aufgebaut wird. Die Zugfeder 21 bremst die Bewegung, sodass ein lautstarkes Zusammenfallen vermieden wird. In der Transportposition werden die Scherenhebel 17a, 17b in üblicher und grundsätzlich bekannter Weise arretiert. Soll das Gestell 13 wieder aus der Transportposition in die Arbeitsposition überführt werden, wird die Arretierung mittels eines ebenfalls grundsätzlich bekannten Entriegelungsmechanismusses gelöst. Die Zugfeder 21 übt dann eine unterstützende Kraft auf den unteren Endabschnitt des zweiten Scherenhebels 17b aus, um das Scherengestell vertikal nach oben zu bewegen.

Die Druckfeder 23 ist mit dem Federende 23a an einer Kontaktfläche 27a eines weiteren Blockelements 27 befestigt. Die Kontaktfläche 27a weist einen im vorliegenden Beispiel als Dom ausgebildeten Vorsprung 27b auf, der in Fig. 3 bis 5 jedoch überwiegend von der Druckfeder 23 verdeckt ist. Das Blockelement 29 weist ebenfalls eine Kontaktfläche 29a und einen als Dom ausgebildeten Vorsprung 29b, wobei sich die Kontaktflächen 27a, 29a und die Vorsprünge 27b, 29b jeweils zugewandt sind.

Das Blockelement 27 ist über starre Verbindungselemente 31, nämlich hier Bleche, mit dem verfahrbar angeordneten Federende 21a der Zugfeder 21 verbunden, sodass das Blockelement 27 bei einer Bewegung des unteren Endabschnitts des Scherenhebels 17b in der Verfahrrichtung X entsprechend mitbewegt wird. Da das Blockelement 29 ortsfest an der Gestellbasis 15 festgelegt ist, bewegen sich in diesem Zustand die Blockelemente 27, 29 relativ zueinander und komprimieren die Druckfeder 23 zwischen sich, wenn der Abstand der Kontaktflächen 27a, 29a die Länge der Druckfeder 23 im entspannten Zustand unterschreitet. Die Vorsprünge 27b, 29b tauchen dabei in ein Inneres der Druckfeder 23 ein, sodass die Druckfeder 23 präzise an den Kontaktflächen 27b, 29b positioniert wird.

Wenngleich die Druckfeder 23 im vorliegenden Beispiel mit ihrem Federende 23a an der Kontaktfläche 27a befestigt ist, ist es gleichermaßen möglich, die Druckfeder 23 mit ihrem Federende 23b an der anderen Kontaktfläche 29a festzulegen.

Das nicht festgelegte Federende 23b hat keinen Kontakt zur gegenüberliegenden Kontaktfläche 29a, wenn sich das Gestell 13 in der Arbeitsposition befindet (Fig. 3). In diesem Zustand ist die Druckfeder 23 entkoppelt und entfaltet keine Wirkung.

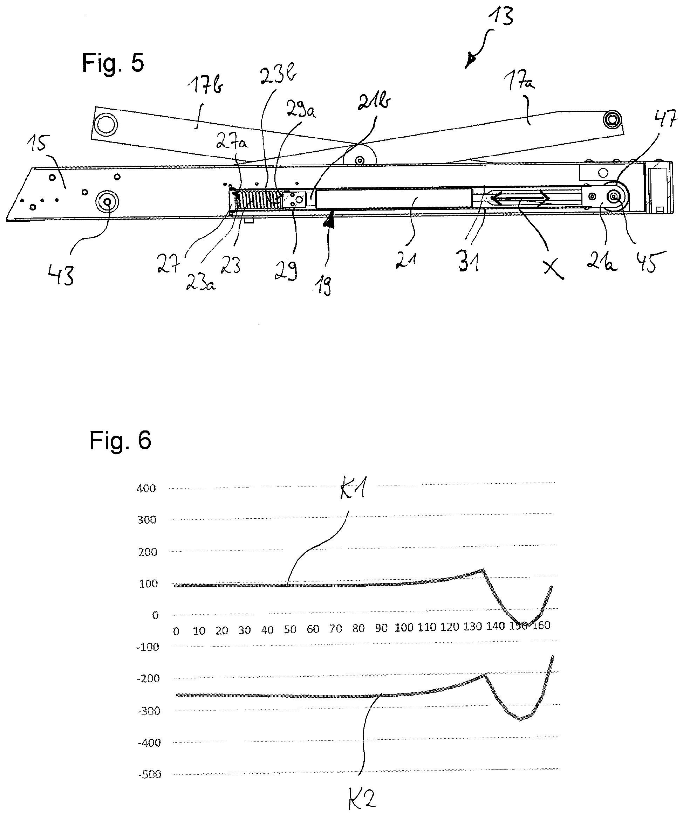

In der Transportposition (Fig. 5) kontaktiert das nicht festgelegte Federende 23b die gegenüberliegende Kontaktfläche 29a, sodass die Druckfeder 23 zwischen den Blöcken 27, 29 komprimiert wird. In diesem Zustand ist die Druckfeder 23 wirksam, was auch als "gekoppelt" bezeichnet werden kann.

Zwischen der Arbeitsposition und der Transportposition durchläuft das Gestell 13 eine in Fig. 4 gezeigte Übergangsposition, an der Stelle, an welcher der Abstand der Kontaktflächen 27a, 29a der Länge der Druckfeder 23 im entspannten Zustand entspricht. Durch den Kontakt des nicht festgelegten Federendes 23b mit der gegenüberliegenden Kontaktfläche 29a wird die Druckfeder 23 "gekoppelt".

Das "Zuschalten" der Druckfeder 23 im unteren Bereich nahe der Transportposition dient insbesondere der zusätzlichen Kraftunterstützung in diesem Bereich, in dem das Aufstellen des Gestells 13 aufgrund des geometrischen Aufbaus besonders schwerfällig ist. Zudem kann beim Zusammenlegen des Gestells ein lautstarkes Aufschlagen durch die Druckfeder 23 verhindert werden.

Fig. 6 zeigt ein Kraftverlaufsdiagramm mit zwei Kraftverlaufskurven K1, K2, wobei die Kraftverlaufskurve K1 das Anheben von der Transportposition in die Arbeitsposition betrifft und die Kraftverlaufskurve K2 das Zusammenklappen von der Arbeitsposition in die Transportposition betrifft. Dabei entspricht der Wert "0" auf der (horizontalen) Abszisse dem aufgestellten Zustand (Arbeitsposition), und der Wert "160" entspricht dem zusammengeklappten Zustand (Transportposition). Die (vertikale) Ordinate entspricht dem Betrag der Kraft.

Wie die Kraftverlaufskurven K1, K2 zeigen, kann mit dem erfindungsgemäßen Gestell 13 ein über den gesamten Aufstell- bzw. Zusammenklappvorgang näherungsweise konstanter Kraftverlauf erzielt werden. Die zum Aufstellen und Zusammenklappen erforderlichen zusätzlichen Kräfte sind dabei betragsmäßig vergleichsweise gering, sodass das Gestell 13 mit geringem Kraftaufwand aufstellbar oder zusammenklappbar ist. Dadurch wird das Überführen des Gestells 13 von der Transportposition in die Arbeitsposition und umgekehrt stark erleichtert. Hinsichtlich ihres Vorzeichens sind die zusätzlichen Kräfte umgekehrt. Insbesondere sind die Kräfte der Federanordnung damit so austariert, dass während des Aufstellens und des Zusammenklappens oder Zusammenlegens des Gestells eine im Verhältnis zur benötigten Kraft ohne Federanordnung geringe Kraft durch den Benutzer aufgebracht werden muss. Dadurch wird verhindert, dass das Gestell beim Lösen der Verriegelung von alleine absackt oder sich unkontrolliert aufstellt.

### Bezugszeichenliste

- 10: Bearbeitungsmaschine
- 11: Werkzeug
- 13: Gestell
- 15: Gestellbasis
- 17: Scherenhebelpaar
- 17a: Scherenhebel
- 17b: Scherenhebel
- 19: Federanordnung
- 21: Zugfeder
- 21a: Federende
- 21b: Federende
- 23: Druckfeder
- 23a: Federende
- 23b: Federende
- 25: Ausnehmung
- 27: Blockelement
- 27a: Kontaktfläche
- 27b: Vorsprung
- 29: Blockelement
- 29a: Kontaktfläche
- 29b: Vorsprung
- 31: Verbindungselement
- 33: Rad
- 35: Handgriff
- 37: oberes Gestellteil
- 39: Saugvorrichtung
- 41: Arbeitstisch
- 43: Drehgelenk
- 45: Drehgelenk
- 47: Rolle

- K1: Kraftverlaufskurve
- K2: Kraftverlaufskurve
- X: Verfahrrichtung

## Patentansprüche

1. Gestell (13) für eine Bearbeitungsmaschine (10), insbesondere für eine Steinbearbeitungsmaschine wie beispielsweise eine Steintrennmaschine, das zwischen einer aufgestellten Arbeitsposition und einer zusammengeklappten Transportposition veränderlich ist und aufweist:
eine Gestellbasis (15), die eine Federanordnung (19) mit einer Zugfeder (21) und einer Druckfeder (23) aufweist, und
ein Scherenhebelpaar (17), das einen ersten Scherenhebel (17a) und einen zweiten Scherenhebel (17b) aufweist, die drehgelenkig miteinander verbunden sind,
wobei ein Endabschnitt des ersten Scherenhebels (17a) drehgelenkig mit der Gestellbasis (15) verbunden ist und ein Endabschnitt des zweiten Scherenhebels (17b) an der Gestellbasis (15) entlang einer Verfahrrichtung (X) linear verfahrbar angeordnet ist,
und wobei die Federanordnung (19) an dem Endabschnitt des zweiten Scherenhebels (17b) angreift, um das Aufstellen des Gestells (13) in die Arbeitsposition und/oder das Zusammenklappen des Gestells (13) in die Transportposition durch ihre Federkraft zu unterstützen.

2. Gestell (13) nach Anspruch 1,
wobei die Federachsen der Zugfeder (21) und der Druckfeder (23) parallel zueinander ausgerichtet sind, wobei die Zugfeder (21) und die Druckfeder (23) insbesondere koaxial angeordnet sind.

3. Gestell (13) nach Anspruch 2,
wobei die Federachsen der Zugfeder (21) und der Druckfeder (23) parallel zu der Verfahrrichtung (X) ausgerichtet sind, wobei sich vorzugsweise die Verfahrrichtung (X) entlang der Federachsen erstreckt.

4. Gestell (13) nach einem der vorstehenden Ansprüche,
wobei die Gestellbasis (15) eine Ausnehmung (25) aufweist, entlang welcher sich die Verfahrrichtung (X) erstreckt.

5. Gestell (13) nach einem der vorstehenden Ansprüche,
wobei die Zugfeder (21) ein erstes Federende (21a) und ein zweites Federende (21b) aufweist, wobei das erste Federende (21a) an dem Endabschnitt des zweiten Scherenhebels (17b) angreift und das zweite Federende (21b) ortsfest an der Gestellbasis (15) festgelegt ist.

6. Gestell (13) nach einem der vorstehenden Ansprüche,
wobei das Gestell (13) während des Veränderns seiner Position von der Arbeitsposition in die Transportposition und umgekehrt jeweils eine Übergangsposition durchläuft, und wobei die Druckfeder (23) entkoppelt ist, wenn sich das Gestell (13) in der Arbeitsposition befindet, wirksam ist, wenn sich das Gestell (13) in der Transportposition befindet, und jeweils entkoppelt oder gekoppelt wird, wenn das Gestell (13) die Übergangsposition durchläuft.

7. Gestell (13) nach einem der vorstehenden Ansprüche,
wobei die Federanordnung (19) Blockelemente (27, 29) aufweist, die jeweils eine Kontaktfläche (27a, 29a) für die Druckfeder (23) aufweisen und relativ zueinander verfahrbar sind, um die Druckfeder (23) zu komprimieren, wobei eines der Federenden (23a) der Druckfeder (23) mit der Kontaktfläche (27a) eines Blockelements (27) fest verbunden ist und das andere Federende (23b) der Druckfeder (23) in Abhängigkeit von dem Abstand der Blockelemente (27, 29) die Kontaktfläche (29a) des anderen Blockelements (29) kontaktiert.

8. Gestell (13) nach Anspruch 7,
wobei eines der Blockelemente (29) ortsfest an der Gestellbasis (15) festgelegt ist und das andere Blockelement (27) bei einer Bewegung des Endabschnitts des zweiten Scherenhebels (17b) entlang der Verfahrrichtung (X) mitbewegt wird.

9. Gestell (13) nach Anspruch 8,
wobei das mitbewegte Blockelement (27) über ein starres Verbindungselement (31), beispielsweise eine Platte oder ein Blech, mit dem Endabschnitt des zweiten Scherenhebels (17b) verbunden ist.

10. Gestell (13) nach einem der Ansprüche 7 bis 9,
wobei die Blockelemente (27, 29) jeweils von der Kontaktfläche (27a, 29a) hervorstehende Vorsprünge (27b, 29b) zum Eintauchen in ein Inneres der Druckfeder (23) aufweisen.

11. Gestell (13) nach einem der vorstehenden Ansprüche,
wobei entweder die Zugfeder (21) eine Gaszugfeder und die Druckfeder (23) vorzugsweise eine Schraubenfeder oder die Druckfeder (23) eine Gasdruckfeder und die Zugfeder (21) vorzugsweise eine Schraubenfeder ist.

12. Gestell (13) nach einem der vorstehenden Ansprüche,
wobei die Gestellbasis (15) Räder (33) und vorzugsweise zumindest einen Handgriff (35) auf einer gegenüberliegenden Seite der Gestellbasis (15) zum Bewegen des Gestells (13) aufweist.

13. Bearbeitungsmaschine (10), insbesondere Steinbearbeitungsmaschine, beispielsweise Steintrennmaschine, umfassend
ein Werkzeug (11), insbesondere ein Sägeblatt,
einen Elektromotor zum Antreiben des Werkzeugs (11) und
das Gestell (13) nach einem der vorstehenden Ansprüche.

## Claims

1. A frame (13) for a machine tool (10), in particular for a stone processing machine such as a stone cutting machine, said frame being variable between a raised working position and a folded-together transport position and having:
a frame base (15) which has a spring arrangement (19) having a tension spring (21) and a compression spring (23), and
a scissor lever pair (17) which has a first scissor lever (17a) and a second scissor lever (17b) which are pivotably connected to one another,
wherein an end section of the first scissor lever (17a) is pivotably connected to the frame base (15) and an end section of the second scissor lever (17b) is arranged in a linearly travelable manner along a direction of travel (X) at the frame base (15),
and wherein the spring arrangement (19) engages at the end section of the second scissor lever (17b) to support the raising of the frame (13) into the working position and/or the folding together of the frame (13) into the transport position through the spring force of said spring arrangement (19).

2. A frame (13) according to claim 1,
wherein the spring axes of the tension spring (21) and the compression spring (23) are aligned in parallel with one another, wherein the tension spring (21) and the compression spring (23) are in particular coaxially arranged.

3. A frame (13) according to claim 2,
wherein the spring axes of the tension spring (21) and the compression spring (23) are aligned in parallel with the direction of travel (X), with the direction of travel (X) preferably extending along the spring axes.

4. A frame (13) according to any one of the preceding claims,
wherein the frame base (15) has a recess (25) along which the direction of travel (X) extends.

5. A frame (13) according to any one of the preceding claims,
wherein the tension spring (21) has a first spring end (21a) and a second spring end (21b), wherein the first spring end (21a) engages at the end section of the second scissor lever (17b) and the second spring end (21b) is fixed in a stationary manner to the frame base (15).

6. A frame (13) according to any one of the preceding claims,
wherein the frame (13) passes through a transition position in each case while changing its position from the working position to the transport position and vice versa, and wherein the compression spring (23) is decoupled when the frame (13) is in the working position, is active when the frame (13) is in the transport position, and is decoupled or coupled in each case when the frame (13) passes through the transition position.

7. A frame (13) according to any one of the preceding claims,
wherein the spring arrangement (19) has block elements (27, 29) which each have a contact surface (27a, 29a) for the compression spring (23) and which are movable relative to one another in order to compress the compression spring (23), wherein one of the spring ends (23a) of the compression spring (23) is fixedly connected to the contact surface (27a) of a block element (27) and the other spring end (23b) of the compression spring (23) contacts the contact surface (29a) of the other block element (29) in dependence on the distance of the block elements (27, 29).

8. A frame (13) according to claim 7,
wherein one of the block elements (29) is fixed in a stationary manner to the frame base (15) and the other block element (27) is moved along on a movement of the end section of the second scissor lever (17b) along the direction of travel (X).

9. A frame (13) according to claim 8,
wherein the block element (27) that is moved along is connected to the end section of the second scissor lever (17b) via a rigid connection element (31), for example a plate or a metal sheet.

10. A frame (13) according to any one of the claims 7 to 9,
wherein the block elements (27, 29) each have projections (27b, 29b), which project from the contact surface (27a, 29a), for dipping into an interior of the compression spring (23).

11. A frame (13) according to any one of the preceding claims,
wherein either the tension spring (21) is a gas tension spring and the compression spring (23) is preferably a helical spring or the compression spring (23) is a gas compression spring and the tension spring (21) is preferably a helical spring.

12. A frame (13) according to any one of the preceding claims,
wherein the frame base (15) has wheels (33) and preferably at least one handle (35) on an oppositely disposed side of the frame base (15) for moving the frame (13).

13. A machine tool (10), in particular a stone processing machine, for example a stone cutting machine, comprising
a tool (11), in particular a saw blade,
an electric motor for driving the tool (11), and
the frame (13) according to any one of the preceding claims.

## Revendications

1. Bâti (13) pour une machine d'usinage (10), en particulier pour une machine d'usinage de pierre telle qu'une machine à tronçonner la pierre, lequel peut être transformé entre une position de travail redressée et une position de transport repliée et qui comprend :
une base de bâti (15) qui comporte un ensemble de ressorts (19) ayant un ressort de traction (21) et un ressort de compression (23), et
une paire de leviers en ciseaux (17) qui comporte un premier levier en ciseaux (17a) et un deuxième levier en ciseaux (17b) qui sont reliés entre eux par une articulation tournante,
une partie d'extrémité du premier levier en ciseaux (17a) étant reliée à la base du bâti (15) par une articulation tournante, et une partie d'extrémité du deuxième levier en ciseaux (17b) étant disposée sur la base de bâti (15) de manière à pouvoir se déplacer linéairement le long d'une direction de déplacement (X),
et l'ensemble de ressorts (19) s'engageant sur la partie d'extrémité du deuxième levier en ciseaux (17b) afin de faciliter, par sa force élastique, le redressement du bâti (13) vers la position de travail et/ou le repliement du bâti (13) vers la position de transport.

2. Bâti (13) selon la revendication 1,
dans lequel les axes du ressort de traction (21) et du ressort de compression (23) sont orientés parallèlement l'un à l'autre,
en particulier, le ressort de traction (21) et le ressort de compression (23) sont disposés de manière coaxiale.

3. Bâti (13) selon la revendication 2,
dans lequel les axes du ressort de traction (21) et du ressort de compression (23) sont orientés parallèlement à la direction de déplacement (X), de préférence, la direction de déplacement (X) s'étend le long des axes des ressorts.

4. Bâti (13) selon l'une des revendications précédentes,
dans lequel la base de bâti (15) présente un évidement (25) le long duquel s'étend la direction de déplacement (X).

5. Bâti (13) selon l'une des revendications précédentes,
dans lequel le ressort de traction (21) présente une première extrémité de ressort (21a) et une deuxième extrémité de ressort (21b),
la première extrémité de ressort (21a) s'engage sur la partie d'extrémité du deuxième levier en ciseaux (17b) et la deuxième extrémité de ressort (21b) est fixée de manière stationnaire à la base de bâti (15).

6. Bâti (13) selon l'une des revendications précédentes,
dans lequel le bâti (13) passe par une position de transition respective lors du changement pour passer de la position de travail vers la position de transport et inversement, et
le ressort de compression (23) est découplé lorsque le bâti (13) se trouve dans la position de travail, est actif lorsque le bâti (13) se trouve dans la position de transport, et est respectivement découplé ou couplé lorsque le bâti (13) passe par la position de transition.

7. Bâti (13) selon l'une des revendications précédentes,
dans lequel l'ensemble de ressorts (19) comprend des éléments de mise en bloc (27, 29) qui présentent chacun une surface de contact (27a, 29a) pour le ressort de compression (23) et qui sont déplaçables l'un par rapport à l'autre afin de comprimer le ressort de compression (23),
l'une des extrémités (23a) du ressort de compression (23) est reliée solidairement à la surface de contact (27a) d'un élément de mise en bloc (27) et l'autre extrémité (23b) du ressort de compression (23) est en contact avec la surface de contact (29a) de l'autre élément de mise en bloc (29) en fonction de la distance entre les éléments de mise en bloc (27, 29).

8. Bâti (13) selon la revendication 7,
dans lequel l'un des éléments de mise en bloc (29) est fixé de manière stationnaire à la base de bâti (15) et l'autre élément de mise en bloc (27) est déplacé avec la partie d'extrémité du deuxième levier en ciseaux (17b) le long de la direction de déplacement (X).

9. Bâti (13) selon la revendication 8,
dans lequel l'élément de mise en bloc (27) déplacé est relié à la partie d'extrémité du deuxième levier en ciseaux (17b) par l'intermédiaire d'un élément de liaison rigide (31), par exemple une plaque ou une tôle.

10. Bâti (13) selon l'une des revendications 7 à 9,
dans lequel les éléments de mise en bloc (27, 29) comportent chacun des saillies (27b, 29b) dépassant de la surface de contact (27a, 29a) pour s'enfoncer à l'intérieur du ressort de compression (23).

11. Bâti (13) selon l'une des revendications précédentes,
dans lequel soit le ressort de traction (21) est un ressort à gaz et le ressort de compression (23) est de préférence un ressort hélicoïdal, soit le ressort de compression (23) est un ressort à gaz et le ressort de traction (21) est de préférence un ressort hélicoïdal.

12. Bâti (13) selon l'une des revendications précédentes,
dans lequel la base de bâti (15) comporte des roues (33) et de préférence au moins une poignée (35) sur un côté opposé de la base de bâti (15) pour déplacer le bâti (13).

13. Machine d'usinage (10), en particulier machine d'usinage de pierre, par exemple machine à tronçonner la pierre, comprenant
un outil (11), en particulier une lame de scie,
un moteur électrique pour entraîner l'outil (11), et
le bâti (13) selon l'une des revendications précédentes.
